# EUROPÄISCHE PATENTSCHRIFT

(11) **EP 1 838 602 B1**
(45) Veröffentlichungstag und Bekanntmachung des Hinweises auf die Patenterteilung: **17.06.2009**
(21) Anmeldenummer: 06703012.2
(22) Anmeldetag: 13.01.2006
(51) Int. Cl.: B65G 47/84, B65G 29/00

(54) **TRANSPORTSTERN**
TRANSPORT STAR WHEELS
SYSTEME DE TRANSPORT EN ETOILE

(30) Priorität: 19.01.2005 DE 102005002510
(43) Veröffentlichungstag der Anmeldung: 03.10.2007
(60) Teilanmeldung: 08019294.1
(73) Patentinhaber: KRONES AG, 93073 Neutraubling (DE)
(72) Erfinder: KLARL, Hermann, 93107 Thalmassing (DE); SCHÖBERL, Wolfgang, 93086 Wörth/Donau (DE)
(74) Vertreter: Grünecker, Kinkeldey, Stockmair & Schwanhäusser Anwaltssozietät
(86) Internationale Anmeldenummer: PCT/EP2006/000258
(87) Internationale Veröffentlichungsnummer: WO 2006/077051

(56) Entgegenhaltungen:
- EP-A- 0 316 001
- EP-B- 0 631 561

## Beschreibung

Die Erfindung betrifft einen Transportstern.

Transportsterne werden zum Transport von Gefäßen wie beispielsweise Flaschen verwendet. Mit Transportsternen können Gefäße beispielsweise von einem Förderer auf einen anderen Förderer transportiert werden. Hierzu weisen die Transportsterne in der Regel Garniturteile auf, die Ausnehmungen zur Aufnahme der Gefäße aufweisen.

Die Garniturteile können ausgewechselt werden, um die Transportsterne verschiedenen Gefäßabmessungen anpassen zu können.

Aus der EP 0 316 001 ist ein Transportstern bekannt, bei dem Schwenkriegel über einen unteren Rand eines Garniturteils greifen können, um ein Abnehmen des Garniturteils zu verhindern.

Aus der EP 0 631 561 ist weiterhin eine Vorrichtung bekannt, bei der ein Winkelhebel mit einem Gewindebolzen mit einem Sterngriff gegen die Oberseite eines Sternkranzes und eine Rundstange gedrückt werden kann, sodass ein Abnehmen des Sternkranzes verhindert wird.

Aufgabe der vorliegenden Erfindung ist es, diese Systeme zu verbessern.

Diese Aufgabe wird mit einem Transportstern nach Anspruch 1, gelöst.

Durch eine Verriegelung von zwei Verriegelungselementen durch Rotation eines der selben, ist eine Befestigung eines Garniturteils auf einer Garniturteilhalterung mit relativ geringem mechanischen Aufwand und doch hoher Präzision möglich.

Durch ein ringförmiges Betätigungselement ist es möglich, dieses so auszugestalten, dass Glasbruch und Flüssigkeit, leicht nach unten weitergeleitet werden können, da das Betätigungselement großen Raum lässt.

Durch Positionierungsmittel der Garniturteilhalterung, mit denen auch das Abheben des Garniturteils verhindert werden kann, ist eine sehr kompakte Ausführung möglich. Es ist möglich, sich separate Mittel, die nur das Verhindern des Abhebens oder nur die Positionierung erreichen zu ersparen. Solche Mittel können jedoch dennoch vorgesehen sein. Die Positionierungsmittel können dabei gleichzeitig als Verriegelungsmittel dienen.

Vorteilhaft ist eine Ausführungsform, bei der der Transportstern Speichen aufweist, da somit Glasbruch und Flüssigkeit leicht abgeführt werden können, da große Öffnungen zwischen den Speichen vorhanden sind. Auch ist es vorteilhaft, das Verriegelungselement am Ende der Speiche vorzusehen, um so eine möglichst kompakte Ausführungsform zu erhalten.

Vorteilhaft ist weiterhin ein Stützelement, mit dem sich ein Betätigungselement auf der Garniturteilhalterung abstützen kann, da dies Verbiegungen des Betätigungselements durch große Belastungen verhindert.

Vorteilhaft ist es, wenn das Betätigungselement oberhalb des Garniturteilhalters und/oder eine Drehachse des Transportsterns umschließend angeordnet ist, da so ein Zugang zu dem Betätigungselement leicht möglich ist.

Vorteilhaft ist es weiterhin, wenn mehrere Verriegelungen vorgesehen sind, die mit dem Betätigungselement verriegelt werden können, da so durch Betätigung lediglich eines Betätigungselements mehrere Verriegelungen verriegeln können, um so einen sicheren Halt des Garniturteils auf der Garniturteilhalterung zu erreichen.

Gemäß einer weiteren vorteilhaften Ausführungsform ist die Garniturteilhalterung zweiteilig ausgebildet, sodass sie formschlüssig klemmend an einem zentralen Mittelteil, insbesondere einer Welle, befestigt werden kann. Diese Ausführungsform hat den Vorteil, dass ein Transportstern an bereits vorhandene Wellen oder dgl. befestigt werden kann. Somit ist eine platzsparende Lösung bewerkstelligt. Außerdem ist es durch diese Bauweise möglich, in beengten Raumverhältnissen konstruktiv möglichst einfach zu bauen. Somit ist es möglich, bei Wellen, die von oben her nicht zugänglich sind, die Garniturteilhalterungen von der Seite anzuklemmen.

Es ist selbstverständlich auch möglich, dass die Garniturteilhalterung drei-, vier- oder anderweitig mehrteilig ausgebildet ist. Diese mehr als zweiteiligen Varianten sind zum Beispiel vonnöten, wenn extrem schwer zugängliche Mitteilteile vorhanden sind, an denen die Befestigung erfolgen soll.

Vorteilhaft ist es - besonders bei mehrteiligen Garniturteilhalterungen -, wenn mindestens ein Verriegelungselement pro Teil zum Beispiel durch ein Gewinde an zum Bespiel den Speichen der Garniturteilhalterung fixiert ist, damit das Betätigungselement mit den daran befestigten Verriegelungselementen nicht nach außen von der Garniturteilhalterung abgezogen werden kann bzw. damit die Verriegelungselemente ihre Position bezüglich des zentralen Mittelteils in radialer Richtung nicht ungewollt verändern.

Ausführungsformen eines Transportsterns sind in den beiliegenden Figuren erläutert. Dabei zeigt:
- Figur 1: eine schematische dreidimensionale Darstellung einer Garniturteilhalterung;
- Figur 2: eine dreidimensionale schematische Darstellung eines Verriegelungselements;
- Figur 3: eine dreidimensionale schematische Darstellung zweier Garniturteile;
- Figur 4: eine schematische dreidimensionale Darstellung eines Verriegelungselements;
- Figur 5: drei schematische Darstellungen von Verriegelungselementen in verschiedenen Positionen zueinander;
- Figur 6: zwei dreidimensionale schematische Darstellungen der Garniturteilhalterung;
- Figur 7: eine dreidimensionale schematische Darstellung der zweiteiligen Garniturteilhalterung.

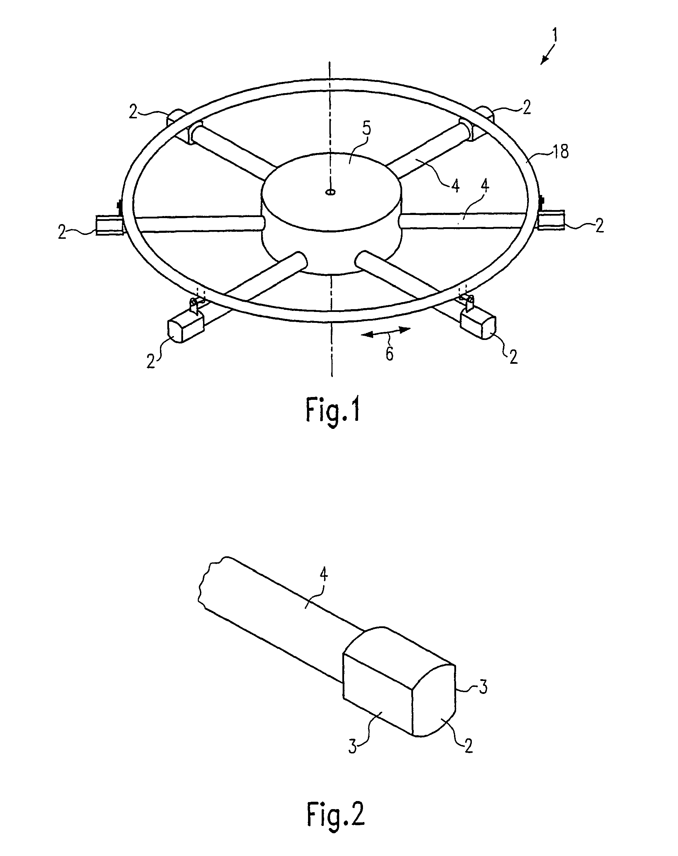

In Figur 1 ist eine Garniturteilhalterung 1 gezeigt. Die Garniturteilhalterung 1 umfasst Verriegelungselemente 2 auf denen ein Garniturteil aufliegen kann. Die Verriegelungselemente 2 sind an den Enden von Speichen 4 vorgesehen, die ihrerseits mit einer Nabe 5 gehalten werden. Durch Rotation der Nabe 5 werden Garniturteile, die auf den Verriegelungselementen 2 aufsitzen, rotiert.

Die Verriegelungselemente 2 dienen hier somit zum einen dazu, das Garniturteil zu positionieren, zum anderen fixieren sie das Garniturteil aber auch in dieser Position durch die Verriegelungsmöglichkeit.

In Figur 1 ist weiterhin ein Betätigungselement 18 dargestellt, das die Form eines Ringes hat. Der Ring führt an den Verriegelungselementen 2 vorbei. Mit dem Betätigungselement 18 können, wie im Folgenden noch näher beschrieben wird, die Verriegelungselemente 2 rotiert werden. Dies erfolgt durch Bewegung des Betätigungselements 18 in Pfeilrichtung 6. Das Betätigungselement 18 umgibt die in Figur 1 gestrichelt dargestellte Drehachse der Garniturteilhalterung 1.

In Figur 2 ist eine Detailvergrößerung des Verriegelungselements 2 dargestellt. Das Verriegelungselement 2 hat einen größeren Durchmesser als die Speiche 4 und ist auf dieser aufgesteckt. Zwischen Verriegelungselement 2 und Speiche 4 kann ein Gleitmittel, wie etwa Fett, ein Kunststoffring (z.B. aus Teflon) oder Ähnliches, vorgesehen sein. Das Verriegelungselement 2 hat einen im Wesentlichen kreisförmigen Querschnitt, weist jedoch an zwei Seiten Abflachungen 3 auf. Im Prinzip ist es auch möglich, dass eine Abflachung 3 nur an einer Seite vorgesehen ist.

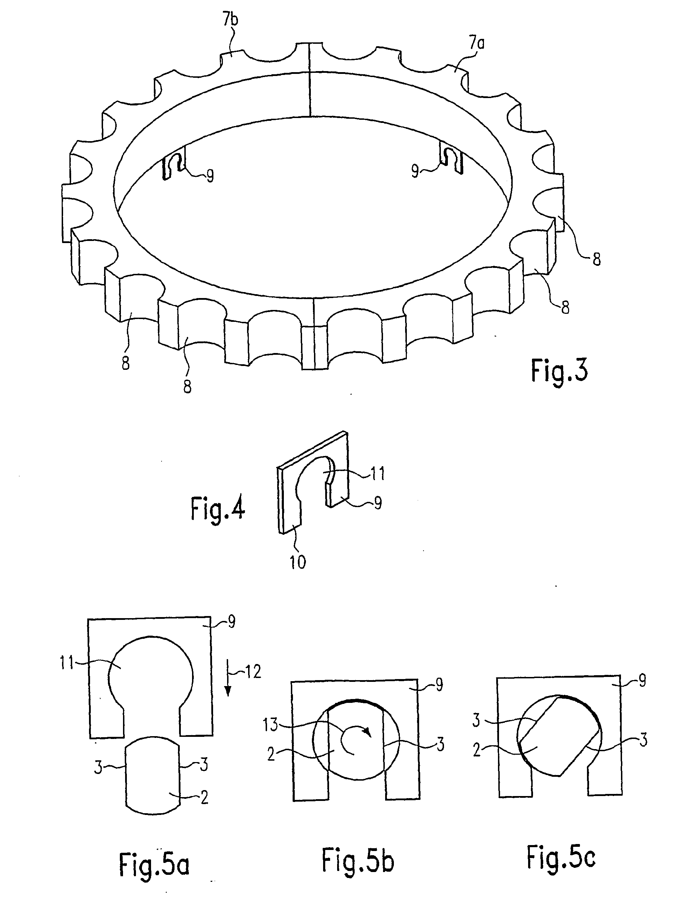

In Figur 3 sind zwei Garniturteile 7 a, 7 b dargestellt, wie sie auf die Garniturteilhalterung 1 aus Figur 1 aufgesetzt werden können. Es können auch mehr als zwei Garniturteile vorgesehen werden, wie etwa drei, vier, fünf oder noch mehr, es kann jedoch auch nur ein einzelnes Teil vorgesehen sein. Jedes der beiden Garniturteile 7 a, 7 b ist unabhängig voneinander, in Figur 3 jedoch nebeneinander dargestellt, da dies der Position entspricht, die sie aufgesetzt auf die Garniturteilhalterung 1 einnehmen. Jedes Garniturteil 7 a, 7 b weist Ausnehmungen 8 auf, die beispielsweise für die Aufnahme eines Flaschenkörpers vorgesehen sind. An der Unterseite der Garniturteile 7 a, 7 b ist ein erstes Verriegelungselement 9 dargestellt. Jedes Garniturteil 7 a, 7 b verfügt über drei solcher Verriegelungselemente 9, wobei jedoch jeweils nur eines sichtbar ist.

In Figur 4 ist eine Ausschnittsvergrößerung eines solchen ersten Verriegelungselements 9 dargestellt. Es weist eine im Wesentlichen u-förmige Form 10 auf, die jedoch im oberen Bereich eine Aufweitung 11 aufweist. Die Aufweitung 11 ist vorzugsweise kreisförmig.

Die Verriegelung des ersten Verriegelungselements 9 und des zweiten Verriegelungselements 2 ist in Figuren 5 a bis 5 c dargestellt. Mit der in Figur 5 a dargestellten Orientierung des zweiten Verriegelungselements 2 kann das erste Verriegelungselement 9 in Pfeilrichtung 12 auf das zweite Verriegelungselement 2 aufgesetzt werden. Dies ist soweit möglich, bis sich das erste Verriegelungselement 9 mit seiner Aufweitung 11 bei dem zweiten Verriegelungselement 2 befindet (wie in Figur 5b dargestellt). Durch Rotation in Pfeilrichtung 13 kann das zweite Verriegelungselement 2 nun mit dem ersten Verriegelungselement 9 verriegelt werden, wie dies in Figur 5 c dargestellt ist. Wie in den Figuren 5 a bis 5 c zu erkennen, kann das zweite Verriegelungselement 2 nur auf Grund der Abflachungen 3 in das erste Verriegelungselement 9 eingeführt werden. Durch die Rotation des Verriegelungselements ist die Abflachung 3 dann jedoch so ausgerichtet, dass das zweite Verriegelungselement 2 formschlüssig mit dem ersten Verriegelungselement 9 verriegelt ist.

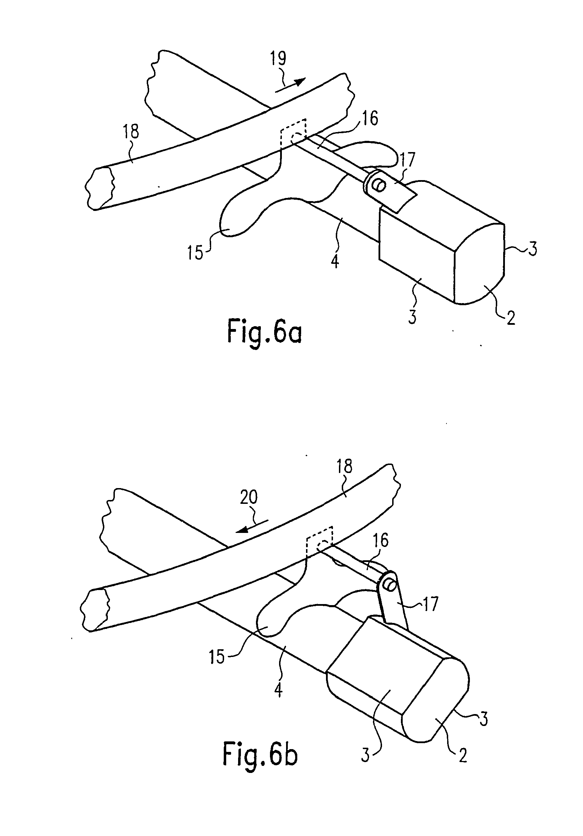

In den Figuren 6 a und 6 b ist dargestellt, wie das zweite Verriegelungselement 2 rotiert werden kann. In Figur 6 a befindet sich das zweite Verriegelungselement 2 in der Position, wie sie in Figuren 5 a und 5 b dargestellt ist. An dem Verriegelungselement 2 ist ein Hebel 17 angeordnet, in den ein Stift 16 drehbar eingreift. Der Stift 16 selbst ist an einem Stützelement 15 befestigt, das seinerseits an dem Betätigungselement 18 befestigt ist. Die Befestigung des Stiftes 16 an dem Betätigungselement 18 kann auch ohne ein Stützelement 15 erfolgen, beispielsweise durch lediglich einen Hebel (ähnlich zu Hebel 17) oder Ähnliches. Das Stützelement 15 weist an seiner Unterseite zwei Einbuchtungen auf, wobei es mit der rechten Einbuchtung auf der Speiche 4 aufliegt. Dadurch stützt sich das Betätigungselement 18 zum einen über das Stützelement 15 direkt auf der Speiche 4 ab, ohne die Mechanik des Stiftes 16 und des Hebels 17 zu belasten. Zum anderen wird eine Rotation des Betätigungselements 18 entgegen der Pfeilrichtung 19 verhindert.

Durch Drehen des Betätigungselementes 18 in Pfeilrichtung 19 wird der Hebel 17 nach oben bewegt, wodurch sich der Stift 16 mit dem Stützelement 15 und dadurch auch das Betätigungselement 18 etwas anheben. Bei weiterer Bewegung in Pfeilrichtung 19 schließlich sitzt das Stützelement 15 mit seiner linken Einbuchtung wieder auf der Speiche 4 auf. Dies ist in Figur 6 b dargestellt. Durch die Bewegung des Betätigungselements 18 in Pfeilrichtung 19 hat sich das zweite Verriegelungselement 2 so gedreht, wie es in Figur 5 c dargestellt ist.

In dieser Position ist das Garniturteil somit auf der Garniturteilhalterung verriegelt.

Durch Bewegung des Betätigungsteils 18 in Pfeilrichtung 20 kann das Verriegelungselement 2 in die Position in Figur 6 a gedreht werden, um so das Garniturteil 7 a, 7 b von der Garniturteilhalterung 1 zu entfernen.

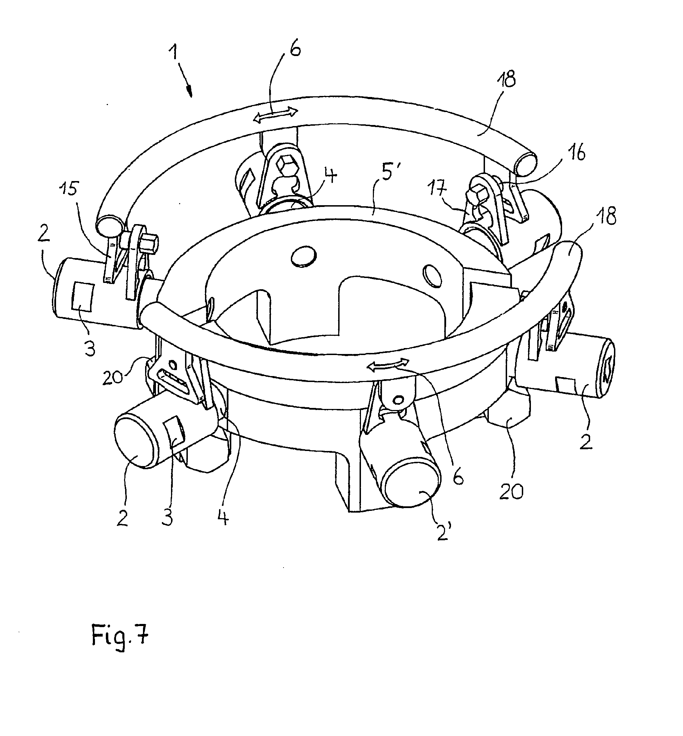

Figur 7 zeigt eine zweiteilige Garniturteilhalterung 1, die mit einem formschlüssigen Klemmelement 5' mit Hilfe von Befestigungselementen 20 an einer hier nicht gezeigten Welle festgeklemmt wird. Um das Entfernen der zweiteiligen Garniturteilhalterung 1 von der Welle leichter zu ermöglichen, ist auch das Betätigungselement 18 zweiteilig ausgebildet. Wie auch die Ausführungsform nach den Figuren 1 bis 6 zeigt, sind die mit Abflachungen 3 versehenen Verriegelungselemente 2 am Ende von Speichen 4 befestigt, die sich ihrerseits an dem formschlüssigen Klemmelement 5' befinden. Wie bereits dargestellt, sind auch die beiden Betätigungselemente 18 in Pfeilrichtung 6 drehbar befestigt, um die Verriegelungselemente 2 von einer Verriegelungsposition in eine Entriegelungsposition zu bringen.

Die hier nicht gezeigte Welle, an die die zweiteilige Garniturteilhalterung 1 angeklemmt wird, kann zum Beispiel ein zentraler Mittelpfosten eines Verschließers sein. Die Klemmung von der Seite ist in diesem Fall besonders vorteilhaft, da der Verschließer auf Grund seiner Funktionsbauteile von oben her nicht zugänglich ist. Mit dieser Lösung kann trotzdem ein einfaches Wechseln von Garniturteilen vorgenommen werden.

Die Verriegelungselemente sind durch Gewinde, die hier nicht gezeigt sind, an den Speichen 4 so befestigt, dass sie sich weiterhin zum Zwecke der Ver- und Entriegelung drehen können. Eine Fixierung ist notwendig, da sonst die Betätigungselemente 18 mit samt den Verriegelungselementen 2 von den Speichen 4 nach außen abgezogen werden könnten. Dieses Problem tritt nur bei geteilten Garniturteilhalterungen auf, da sich das Betätigungselement 18 mit den daran befestigten Verriegelungen 2 in einer im Wesentlichen kreisförmigen Anordnung (s. Fig. 1) selbst durch seine Anordnung fixiert.

Außerdem wird durch die Fixierung der Verriegelungselemente 2 ein "wandern" dieser entlang der Speichen 4 bei der Betätigung des Betätigungselements verhindert. Eine Bewegung entlag der Speichen 4 ist vor allem bei der Ausführung nach Fig. 7 zu verhindern, da sich sonst die Abflachungen 3 in Bezug auf den Mittelpunkt der Garniturteilhalterung 1 verschieben, was dazu führt, dass die Garniturteile schlecht bzw. nicht mehr auf die Garniturteilhalterung aufgesetzt werden können.

## Patentansprüche

1. Transportstern mit mindestens einem auswechselbaren Garniturteil mit einem ersten Verriegelungselement (9) und einer Garniturteilhalterung mit einem zweiten Verriegelungselement (2), **dadurch gekennzeichnet, dass** eines der beiden Verriegelungselemente (2) durch Rotation um seine Längsachse mit dem anderen Verriegelungselement (9) verriegelt wird.

2. Transportstern nach Anspruch 1, **dadurch gekennzeichnet, dass** das zweite Verriegelungselement (2) zum Verriegeln rotiert werden kann.

3. Transportstern nach einem der Ansprüche 1 oder 2, **dadurch gekennzeichnet, dass** das zweite Verriegelungselement (2) eine Tülle, ein Rohrstück, oder ein Wellenstück ist.

4. Transportstern nach einem der Ansprüche 1 bis 3, **dadurch gekennzeichnet, dass** das zweite Verriegelungselement (2) an einer Speiche (4) des Transportsterns (1), vorzugsweise am Ende der Speiche (4) vorgesehen ist.

5. Transportstern nach einem der Ansprüche 1 bis 4, **dadurch gekennzeichnet, dass** das zweite Verriegelungselement (2) einen Hebel (17) aufweist, an den ein Stift (16) eines Betätigungselements (18) angreifen kann, wobei das Betätigungselement (18) vorzugsweise einen ringförmigen Griff umfasst.

6. Transportstern nach Anspruch 5, **dadurch gekennzeichnet, dass** ein Stützelement (15) vorgesehen ist, mit dem sich das Betätigungselement (18) auf der Gamiturteilhalterung (1) abstützt.

7. Transportstern nach einem der Ansprüche 1 bis 6, **dadurch gekennzeichnet, dass** das zweite Verriegelungselement (2) einen kreisförmigen Querschnitt mit einer Abflachung (3) aufweist und das erste Verriegelungselement (9) eine U-förmige Aufnahme mit einer Aufweitung (11) aufweist, wobei das zweite Verriegelungselement (2) aufgrund der Abflachung (3) in die U-förmige Aufnahme passt und durch Rotation im Bereich der Aufweitung (11) mit dem ersten Verriegelungselement (9) verriegelbar ist.

## Claims

1. Transporting star wheel having at least one exchangeable fitting part with a first locking element (9) and having a fitting-part holder with a second locking element (2), **characterized in that** one of the two locking elements (2) is locked with the other locking element (9) by being rotated about its longitudinal axis.

2. Transporting star wheel according to Claim 1, **characterized in that** the second locking element (2) can be rotated for locking purposes.

3. Transporting star wheel according to either of Claims 1 and 2, **characterized in that** the second locking element (2) is a bushing, a pipe component or a shaft component.

4. Transporting star wheel according to one of Claims 1 to 3, **characterized in that** the second locking element (2) is provided on a spoke (4) of the transporting star wheel (1), preferably at the end of the spoke (4).

5. Transporting star wheel according to one of Claims 1 to 4, **characterized in that** the second locking element (2) has a lever (17), on which a pin (16) of an actuating element (18) can act, the actuating element (18) preferably comprising an annular grip.

6. Transporting star wheel according to Claim 5, **characterized by** the provision of the supporting element (15) by means of which the actuating element (18) is supported on the fitting-part holder (1).

7. Transporting star wheel according to one of Claims 1 to 6, **characterized in that** the second locking element (2) has a circular cross section with a flattened portion (3) and the first locking element (9) has a U-shaped mount with a widened portion (11), wherein the second locking element (2) fits into the U-shaped mount on account of the flattened portion (3) and can be locked with the first locking element (9) by being rotated in the region of the widened portion (11).

## Revendications

1. Système de transport en étoile comprenant au moins une partie de garniture amovible comprenant un premier élément de verrouillage (9) et une fixation de partie de garniture comprenant un second élément de verrouillage (2), **caractérisé en ce que** l'un des deux éléments de verrouillage (2) est verrouillé par rotation autour de son axe longitudinal avec l'autre élément de verrouillage (9).

2. Système de transport en étoile suivant la revendication 1, **caractérisé en ce que** le second élément de verrouillage (2) peut être pivoté pour verrouillage.

3. Système de transport en étoile suivant l'une des revendications 1 et 2, **caractérisé en ce que** le second élément de verrouillage (2) est une douille, une pièce tubulaire ou une portion d'arbre.

4. Système de transport en étoile suivant l'une des revendications 1 à 3, **caractérisé en ce que** le second élément de verrouillage (2) est prévu sur un rayon (4) du système de transport en étoile (1), de préférence à l'extrémité du rayon (4).

5. Système de transport en étoile suivant l'une des revendications 1 à 4, **caractérisé en ce que** le second élément de verrouillage (2) présente un levier (17), sur lequel peut agir une broche (16) d'un élément d'actionnement (18), l'élément d'actionnement (18) comportant de préférence une poignée annulaire.

6. Système de transport en étoile suivant la revendication 5, **caractérisé en ce qu'**il est prévu un élément d'appui (15), par lequel l'élément d'actionnement (18) s'appuie sur la fixation d'élément de garniture (1).

7. Système de transport en étoile suivant l'une des revendications 1 à 6, **caractérisé en ce que** le second élément de verrouillage (2) présente une section transversale circulaire avec un méplat (3) et le premier élément de verrouillage (9) présente un logement en U avec un élargissement (11), le second élément de verrouillage (2) s'adaptant en raison du méplat (3) dans le logement en U et prouvant être verrouillé avec le premier élément de verrouillage (9) par rotation dans la zone de l'élargissement (11).
